# EUROPEAN PATENT APPLICATION

(11) **EP 2 192 504 A1**
(43) Date of publication of application: **02.06.2010**
(21) Application number: 09176567.7
(22) Date of filing: 19.11.2009
(51) Int. Cl.: G06F 17/30

(54) **Methods for locating an item when a search mode is not selected**

(30) Priority: 26.11.2008 US 323799
(71) Applicant: Honeywell International Inc., Morristown, NJ 07962 (US)
(72) Inventor: Suddreth, John G., Morristown, NJ 07962-2245 (US); Nichols, Troy, Morristown, NJ 07962-2245 (US)
(74) Representative: Buckley, Guy Julian

(57) **Abstract**

Methods and systems are provided for locating an item in a window (202) displayed on a display device (102). The method initializes by receiving a user input when no item is selected within the window (202). In response to receiving the user input, the method further comprises graphically indicating a search mode (502) on the display device (102) and searching a database (110) associated with the window (202) for an element (700) that satisfies the user input. If an element (700) in the database (110) satisfies the user input, the method further comprises graphically indicating the element (700) in the window (202).

## Description

### TECHNICAL FIELD

The subject matter described herein relates generally to electronic display systems, and more particularly, embodiments of the subject matter relate to methods for locating an item on a display device in an aircraft without manually selecting a search function.

### BACKGROUND

In many modem aircraft, electronic cockpit displays (e.g., glass cockpits) replace traditional mechanical gauges and paper charts, and instead utilize computerized or electronic displays to graphically convey information. Each electronic display may include one or more windows that display information associated with a number of computing processes. For example, a single electronic display may simultaneously display a navigational map window, a synthetic vision window, a flight management window, and a flight planning window. These electronic displays provide enhanced situational awareness to a user and enable a user to perform flight management tasks more easily and efficiently, for example, by eliminating the need to consult paper charts or locate and analyze mechanical gauges.

Often, it is desirable to search within a window to locate a particular item of interest. For example, a user may want to locate a particular waypoint or navigational aid on a navigational map or in the flight plan. In most current systems, in order to locate a particular item, a user must manually select a search field or search box in an active window to initiate a search mode for the underlying process. For example, in an aircraft environment, a pilot may have to temporarily release the joystick used to operate the aircraft, and position his or her hand over to a mouse or another interface device to select and/or initiate the search mode. Otherwise, if the search field or function is not selected, attempts to enter a particular item via a keyboard or another input device are effectively ignored (i.e., typing on the keyboard does not produce any noticeable or useful result). Additionally, if there are multiple windows on a display, the pilot may also have to identify and select the proper window for the search. After manually selecting the search mode, the pilot may have to move his or her hand again in order to utilize a keyboard or another device to enter (or input) the item to be located. As a result, current systems increase demand on the pilot, particularly if the pilot is attempting to locate an item on a display device during a critical phase of flight (e.g., during landing or in an emergency situation).

### BRIEF SUMMARY

A method is provided for locating an item on a display device. The method comprises indicating a search mode on the display device in response to receiving a user input when the search mode is not selected and automatically searching a database for an element that satisfies the user input. The method further comprises identifying, on the display device, an element in the database that satisfies the user input.

In another embodiment, a method is provided for locating an item in a window displayed on a display device. The method initializes by receiving a user input when no item is selected within the window. In response to receiving the user input, the method further comprises graphically indicating a search mode on the display device and searching a database associated with the window for an element that satisfies the user input. If an element in the database satisfies the user input, the method further comprises graphically indicating the element in the window.

### BRIEF DESCRIPTION OF THE DRAWINGS

Embodiments of the subject matter will hereinafter be described in conjunction with the following drawing figures, wherein like numerals denote like elements, and

FIG. 1 is a block diagram of a display system suitable for use in an aircraft in accordance with one embodiment;

FIG. 2 is a schematic view of an exemplary navigational map suitable for use with the display system of FIG. 1;

FIG. 3 a schematic view of a plurality of windows suitable for use with the display system of FIG. 1;

FIG. 4 is a flow diagram of an exemplary automatic search process suitable for use with the display system of FIG. 1 in accordance with one embodiment;

FIG. 5 is a schematic view of an exemplary navigational map, suitable for use with the automatic search process of FIG. 4, showing a graphical indication of a search mode in accordance with one embodiment;

FIG. 6 is a schematic view of a plurality of windows, suitable for use with the automatic search process of FIG. 4, showing a graphical indication of a search mode in accordance with one embodiment;

FIG. 7 is a schematic view of an exemplary navigational map, suitable for use with the automatic search process of FIG. 4, showing graphical identification of an element that satisfies a user input in accordance with one embodiment; and

FIG. 8 is a schematic view of a plurality of windows, suitable for use with the automatic search process of FIG. 4, showing graphical identification of an element that satisfies a user input in accordance with one embodiment.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description.

Techniques and technologies may be described herein in terms of functional and/or logical block components, and with reference to symbolic representations of operations, processing tasks, and functions that may be performed by various computing components or devices. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

For the sake of brevity, conventional techniques related to graphics and image processing, navigation, flight planning, aircraft controls, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Technologies and concepts discussed herein relate to display systems adapted to allow a user to quickly locate an item in one or more graphically rendered windows on a display device without having to manually select a search field or manually initiate a search function prior to entering a search query. Although the subject matter may be described herein in the context of an aircraft, various aspects of the subject matter may be implemented in other vehicles or in other display systems, and the subject matter is not intended to be limited to use with any particular vehicle. As described below, in an exemplary embodiment, a display system is configured to received a user input and search one or more databases for an element that satisfies the user input without the user having to first select or activate a search mode or search function. If an element in a database satisfies the user input, the element may be graphically indicated or identified in one or more windows in a manner that provides enhanced situational awareness and allows a user to quickly and reliably satisfy his or her information needs.

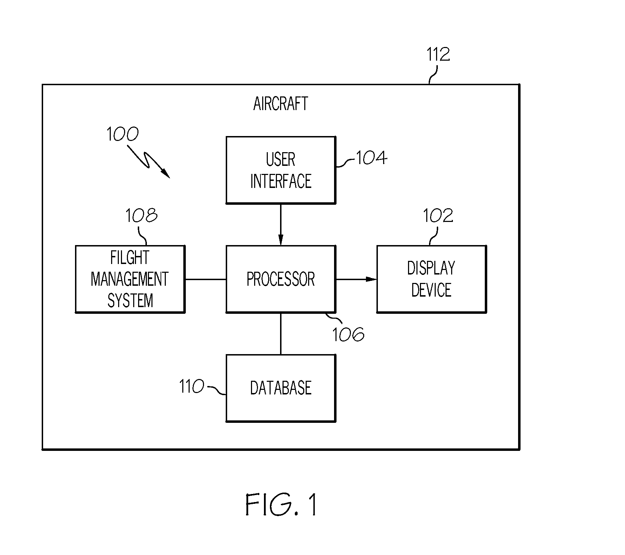

FIG. 1 depicts an exemplary embodiment of a display system 100, which may be located onboard a vehicle, such as an aircraft 112. The display system 100 may include, without limitation, a display device 102, a user interface device 104, a processor 106, and a flight management system 108 (FMS). The display system 100 may also include at least one database 110 suitably configured to support operation of the display system 100 as described in greater detail below.

It should be understood that FIG. 1 is a simplified representation of a display system 100 for purposes of explanation and ease of description, and FIG. 1 is not intended to limit the application or scope of the subject matter in any way. In practice, the display system 100 and/or aircraft 112 will include numerous other devices and components for providing additional functions and features, as will be appreciated in the art. Furthermore, although the subject matter may be described herein in the context of an aviation environment, various aspects of the subject matter may be implemented in other vehicles, for example, motor vehicles (e.g., cars or motorcycles) and/or watercraft, or in non-vehicle applications, and the subject matter is not intended to be limited to use in an aircraft or any particular vehicle.

In an exemplary embodiment, the display device 102 is coupled to the processor 106, which in turn is coupled to the flight management system 108. In an exemplary embodiment, the user interface device 104 is coupled to the processor 106 and adapted to allow a user (e.g., pilot, copilot, or crew) to interact with the display system 100. The processor 106 is coupled to the database 110 such that the processor 106 can read information from the database 110, and the processor 106 is configured to display, render, or otherwise convey one or more graphical representations or images associated with operation of the aircraft 112 on the display device 102. In an exemplary embodiment, the flight management system 108, the processor 106, and the database 110 are cooperatively configured to enable searching for items and/or elements in a database 110 associated with a window graphically displayed on the display device 102, as described in greater detail below.

In an exemplary embodiment, the display device 102 is realized as an electronic display configured to display flight information or other data associated with operation of the aircraft 112 under control of the processor 106, as will be understood. Depending on the embodiment, the display device 102 may be realized as a visual display device such as a monitor, display screen, flat panel display, or another suitable electronic display device. In an exemplary embodiment, the display device 102 is located within a cockpit of the aircraft 112. It should be appreciated that although FIG. 1 shows a single display device 102 onboard the aircraft 112, in practice, additional display devices may be present. Furthermore, although FIG. 1 shows the display device 102 within the aircraft 112, in practice, the display device 102 may be located outside the aircraft 112 (e.g., on the ground as part of an air traffic control center or another command center) and communicatively coupled to the processor 106 over a data link. For example, the display device 102 may communicate with the processor 106 using a radio communication system or another data link system, such as a controller pilot data link (CPDL).

In various embodiments, the user interface device 104 may be realized as a keypad, touchpad, keyboard, mouse, touchscreen, joystick, or another suitable device adapted to receive input from a user. In some embodiments, the user interface device 104 may be realized as a microphone, a headset, or another device capable of receiving an auditory input. It should also be appreciated that although FIG. 1 shows a single user interface device 104, in practical embodiments, multiple user interface devices may be present. In an exemplary embodiment, user interface device 104 is located within a cockpit of the aircraft 112, however, in practice, the user interface device 104 may be located outside the aircraft 112 and communicatively coupled to the processor 106 over a wireless data link or another suitable communication channel.

In an exemplary embodiment, the flight management system 108 is located onboard the aircraft 112. Although not illustrated, in practice, the flight management system 108 may be coupled to and/or include one or more additional modules or components as necessary to support navigation, flight planning, and other conventional aircraft control functions in a conventional manner. For example, the flight management system 108 may obtain and/or determine one or more navigational parameters associated with operation of the aircraft 112, and provide these parameters to the processor 106. Depending on the embodiment, the flight management system 108 may obtain and/or determine one or more of the following: the geographic location and/or position of the aircraft 112 (e.g., the latitude and longitude), the heading of the aircraft 112 (i.e., the direction the aircraft is traveling in relative to some reference), the current altitude of the aircraft 112, a speed metric associated with the aircraft 112 (e.g., the airspeed, groundspeed or velocity), the current wind speed and/or wind direction, the temperature, or pressure. In this regard, the flight management system 108 may include and/or be coupled to a navigation system such as a global positioning system (GPS), inertial reference system (IRS), or a radio-based navigation system (e.g., VHF omni-directional radio range (VOR) or long range aid to navigation (LORAN)), and may include one or more sensors suitably configured to support operation of the navigation system, as will be appreciated in the art. The flight management system 108 may also include and/or be coupled to one or more sensor systems configured to obtain one or more of the operational parameters associated with the aircraft 112 described above. As described below, the flight management system 108 and/or the processor 106 are cooperatively configured to graphically display information regarding operation of the aircraft 112.

In an exemplary embodiment, the processor 106 is configured to display, render, or otherwise convey one or more graphical representations or images associated with operation of the aircraft 112 in one or more windows on the display device 102, as described in greater detail below. The processor 106 may be implemented or realized with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this regard, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration. In practice, processor 106 includes processing logic that may be configured to carry out the functions, techniques, and processing tasks associated with the operation of the display system 100, as described in greater detail below. Furthermore, the steps of a method or algorithm described in connection with the embodiments disclosed herein may be embodied directly in hardware, in firmware, in a software module executed by processor 106, or in any practical combination thereof. Additionally, although FIG. 1 depicts the processor 106 and the flight management system 108 as separate elements, in practice, the processor 106 may be integral with the flight management system 108 or another module within the vehicle or aircraft 112.

In an exemplary embodiment, the processor 106 and/or the flight management system 108 are cooperatively configured to display, render, or otherwise convey graphical representations, images, information pertaining to the aircraft 112 in one or more graphical windows on the display device 102. In this regard, a window refers to a visual area containing graphical representations or images associated with one or more computing processes or programs executing on the processor 106 and/or flight management system 108, as will be appreciated in the art and described in greater detail below. That is, a window generates, conveys, renders, or otherwise displays graphical representations or images based on data received from one or more underlying processes or programs. In an exemplary embodiment, each window displayed on the display device 102 is associated with an underlying process executing on the flight management system 108 or processor 106, as will be appreciated in the art. Accordingly, as used herein, the term "window" may be understood as referring to a graphical window (e.g., a window displayed on a display device) along with the underlying process and/or program associated with the window, as will be appreciated in the art. In an exemplary embodiment, a window has a defined area and/or boundary (e.g., a bordered rectangle), wherein the contents of the window (e.g., graphical representations or images within the area or boundary) convey information pertaining to the process and/or program the window is associated with. Furthermore, in some embodiments, a window at any time may convey no information, that is, the window and/or space on the display device 102 may be reserved for use by a particular process. Depending on the embodiment, the location or positioning of the window within a viewing area on the display device 102 may be adjusted (that is, the window may be moved), the size, shape, and/or area of the window may be adjusted, and a window may be overlapped by one or more other windows (e.g., cascaded windows) or display elements on the display device, as will be appreciated in the art.

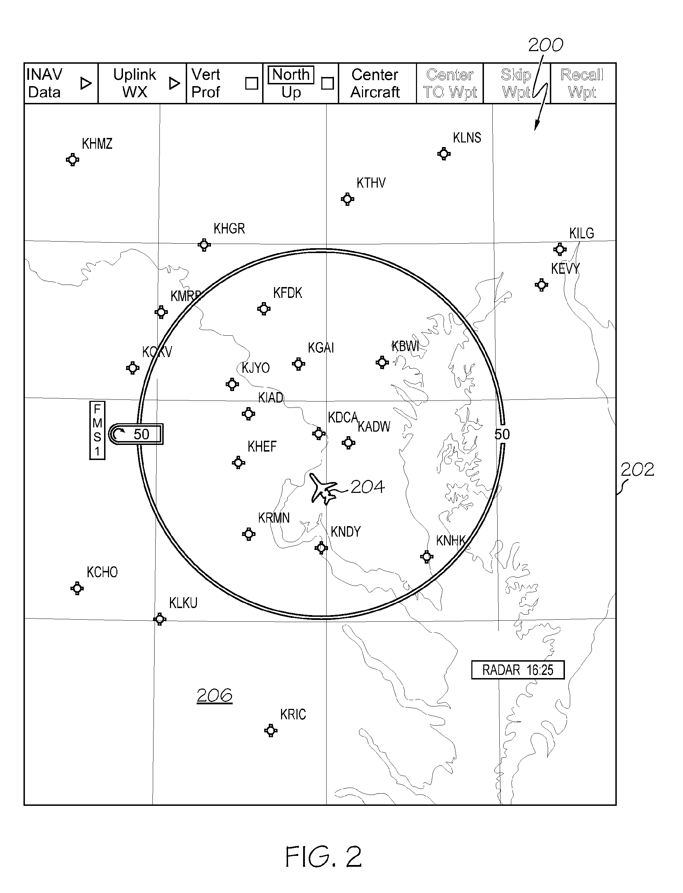

For example, as shown in FIG. 2, the processor 106 and/or flight management system 108 may be cooperatively configured to render or otherwise graphically display a navigational map 200 in a window 202 (e.g., a navigational map window) on the display device 102. In this regard, the processor 106 and/or the flight management system 108 may also be configured to render a graphical representation of the aircraft 204 within the navigational window 202, which may be overlaid or rendered on top of a background 206. The background 206 may be realized as a graphical representation of the terrain, topology, or other suitable items or points of interest (e.g., waypoints, airports, navigational aids) within a given distance of the aircraft 112, as will be appreciated in the art.

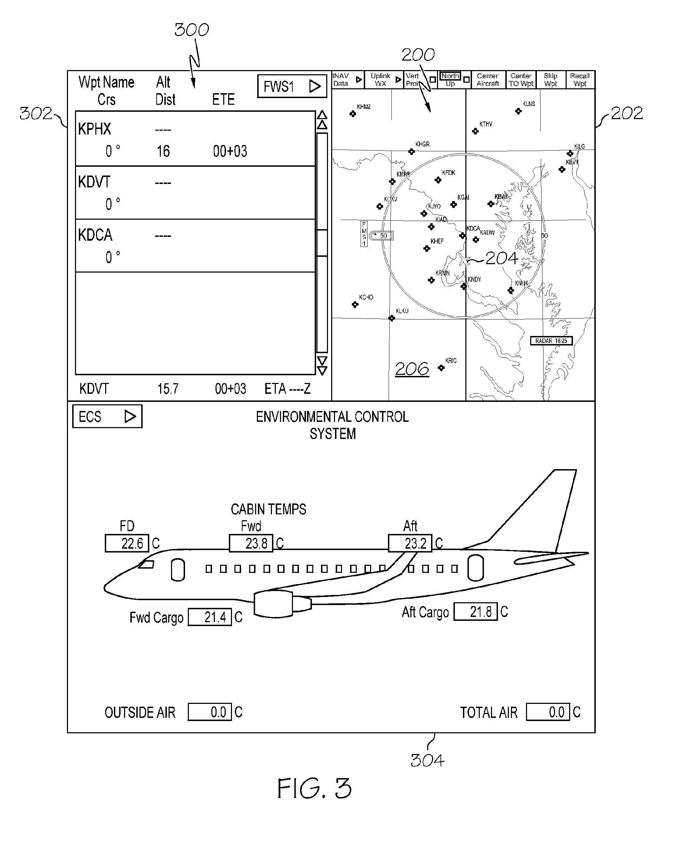

In some embodiments, the display device 102 may have multiple windows simultaneously displayed thereon. For example, as shown in FIG. 3, in addition to a navigational window 202, the processor 106 and/or flight management system 108 may be cooperatively configured to render or otherwise graphically display a flight plan 300 (or waypoint list) in a separate window 302 (e.g., a flight planning window). It should be appreciated that, in practice, numerous possible configurations and combinations of windows are possible, and the subject matter described herein is not intended to limited to any particular arrangement. For example, the processor 106 and/or flight management system 108 may be cooperatively configured to render or otherwise graphically display information relating to the operating status of the aircraft 112 (e.g., an environmental control window 304) or additional perspective views (e.g., a synthetic vision display or three-dimensional perspective view) in one or more additional windows on the display device 102. In the depicted embodiment, the windows 202, 302, 304 are tiled or arranged in a nonoverlapping manner, however, in practice, the windows may be overlapping or arranged in another suitable manner.

Referring again to FIG. 1, in an exemplary embodiment, the processor 106 accesses or includes a database 110 suitably configured to support operation of one or more processes and/or programs executing on the processor 106 and/or flight management system 108, as described herein. It should be appreciated that although FIG. 1 shows a single database 110, in practice, additional databases may be present. Furthermore, although FIG. 1 shows the database 110 within the aircraft 112, in practice, the database 110 may be located outside the aircraft 112 and communicatively coupled to the processor 106 over a data link or another suitable communication channel. In addition, although FIG. 1 depicts the database 110 as a separate component, in practical embodiments, the database 110 may be integral with the flight management system 108 or the processor 106. In this regard, each process and/or program executing on the processor 106 and/or flight management system 108 may implement or be coupled to one or more databases 110 (e.g., application-specific databases) associated with the process and/or program. The database 110 may be realized in memory, such as, for example, RAM memory, flash memory, registers, a hard disk, a removable disk, or any other form of storage medium known in the art.

In an exemplary embodiment, the database 110 contains information for items and/or elements associated with operation of the aircraft 112. For example, in an aircraft 112, a navigational map process or a flight planning process may implement and/or be associated with a database 110 that contains information associated with a plurality of navigational reference points or navigational aids. The navigational database may be based on one or more sectional charts, digital maps, or any other suitable commercial or military database or map, as will be appreciated in the art. For each navigational reference point, the database 110 may maintain position information (e.g., latitude and longitude), altitude information (e.g., the altitude of the navigational reference point or the surrounding area), and other relevant information for the given reference point, as will be appreciated in the art. Depending on the embodiment, the navigational database may maintain information for various types of navigational reference points, such as, for example, VHF omni-directional ranges (VORs), distance measuring equipment (DMEs), tactical air navigation aids (TACANs), and combinations thereof (e.g., VORTACs), position fixes, initial approach fixes (IAFs), final approach fixes (FAFs) or other navigational reference points used in area navigation (RNAV). In some embodiments, a database 110 may be associated with multiple processes and/or programs. For example, a navigational database may be associated with and/or accessed by a navigational map process and a flight planning process. It should be appreciated that, depending on the processes executing on the processor 106 and/or flight management system 108, that instead of or in addition to navigational database, a database 110 may be realized as an obstacle database, a taxi airport database, a geopolitical database, a road data base, an approach database, an external database (e.g., accessed via a data link or network), or another suitable user-defined or system-generated database.

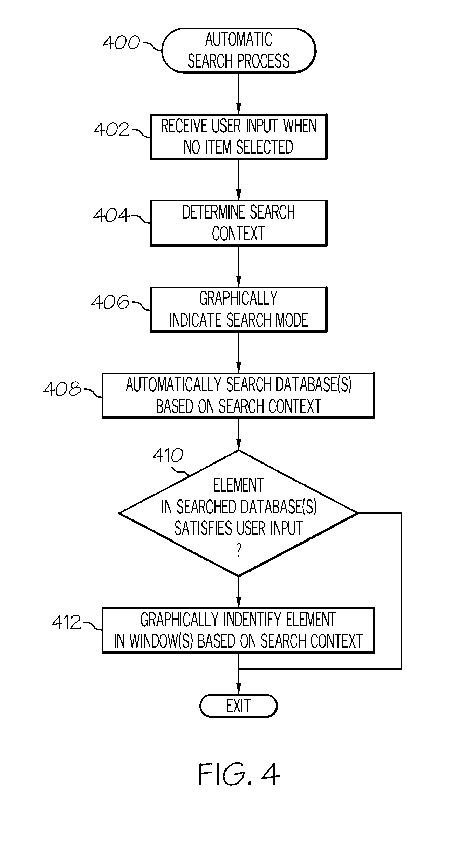

Referring now to FIG. 4, in an exemplary embodiment, a display system may be configured to perform an automatic search process 400 and additional tasks, functions, and operations described below. The various tasks may be performed by software, hardware, firmware, or any combination thereof. For illustrative purposes, the following description may refer to elements mentioned above in connection with FIG. 1. In practice, the tasks, functions, and operations may be performed by different elements of the described system, such as a display device, a user interface device, a processor, a flight management system, or a database. It should be appreciated that any number of additional or alternative tasks may be included, and may be incorporated into a more comprehensive procedure or process having additional functionality not described in detail herein.

Referring again to FIG. 4, and with continued reference to FIGS. 1-3, an automatic search process 400 may be performed to quickly locate an item and/or element within one or more windows displayed on a display device. In an exemplary embodiment, the automatic search process 400 initializes by receiving a user input when no selectable item, object, field, and/or other element is selected in a window displayed on the display device (task 402). For example, one or more windows displayed on the display device may each include any number of selectable items, objects, fields, and/or other elements which are currently displayed in the window(s) on the display device. In an exemplary embodiment, if an item in the window has been selected, the display system 100 responds in a conventional manner without continuing execution of automatic search process 400, as will be appreciated in the art. In this manner, the automatic search process 400 continues only when certain items, objects, fields, and/or other elements currently displayed in the windows on the display device are in an inactive state. That is, a user has not activated and/or selected any currently displayed item, object, field, and/or other element, or if the user has previously activated and/or selected any currently displayed item, the process and/or program associated with the activation and/or selection has timed out or expired, as will be understood in the art. In this manner, if no items, objects, fields, and/or other elements are selected, the automatic search process 400 enables search functionality of the display system 100 without the user having to manually select or designate the desired search function or search field, as described below.

In an exemplary embodiment, the automatic search process 400 receives a user input in the form of an alphanumeric and/or textual input via the user interface device 104 (e.g., via a keyboard or keypad). As described in greater detail below, a text entry field and/or search field may be displayed and/or rendered on the display device in response to the user input. Alternatively, the display system 100 and user interface 104 may be cooperatively configured to generate an alphanumeric and/or textual input in response to receiving an auditory input (e.g., via a microphone or headset).

In response to receiving the user input when no item is selected, the automatic search process 400 continues by determining a search context that identifies or designates the window(s) and/or processes for searching (task 404). As described in greater detail below, the search context determines how the automatic search process 400 responds to the received user input depending on the status of the display system. The search context may designate one or more windows for searching for the user input, or designate only an active or focused window (or the current window). In an exemplary embodiment, based on the search context, the automatic search process 400 indicates a graphically indicates a search mode (e.g., by displaying a text entry field or search field) in response to the user input, and provides the user input to one or more windows and/or processes. In this manner, the automatic search process 400 functions as an intelligent search process that eliminates unnecessary and/or distracting steps that a user may have to perform in conventional systems. For example, a user, such as a pilot, does not have to manually identify the appropriate window or process for searching, and then manually select the search field or function associated within that window before entering the search query and initiating the search. As a result, more of the pilot's effort and attention can be focused on operating the aircraft.

In accordance with one embodiment, if there is a window that is currently displayed and active, the automatic search process 400 may determine the search context such that it designates the active window for searching. In one embodiment, the active window may be the window having a cursor or pointer positioned over and/or within the area defined by the window. Alternatively, the active window comprises the window where there was the most recent activity, for example, based on user input or a response from the display system 100 within the window (e.g., a pop-up or message within the window). In this regard, the search context may designate a window that is not necessarily "active," but rather a window that a user was previously interested in and/or engaged with (e.g., a "focused window") as a default window for searching. In another embodiment, if there is no active window, for example, if the previously active window has timed out or expired, the automatic search process 400 may determine the search context such that it designates all currently displayed windows for searching. In another embodiment, if there is no active window, the automatic search process 400 may determine the search context such that it designates the entire system (e.g., all databases 110) for searching.

In yet another embodiment, the automatic search process 400 may determine the search context such that it designates a process and/or program that is the most commonly used process and/or program for searching. For example, the automatic search process 400 may maintain a record of processes (or windows) and searches, such that the automatic search process 400 may determine the most commonly used process and designate that process for searching. In an alternative embodiment, the automatic search process 400 may determine the search context such that it designates a process and/or program that is most relevant to the user input. For example, if the user input begins with a 'K' (e.g., 'KDCA') the automatic search process 400 may recognize the user input as an airport and designate a process associated with a navigational or airport database, such as a navigational window (e.g., window 202) or flight planning window (e.g., window 302). Alternatively, the automatic search process 400 may designate a most relevant process based upon the phase of flight of the aircraft 112. For example, the flight management system 108 may determine the aircraft 112 is approaching a known landing location (e.g., a runway or landing strip) based on a proximity to an associated navigational reference point, a rate of descent of the aircraft 112, or other factors, as will be appreciated in the art. Based on the phase of flight, the automatic search process 400 may determine and/or designate a process or window that is most relevant to landing the aircraft 112 for searching.

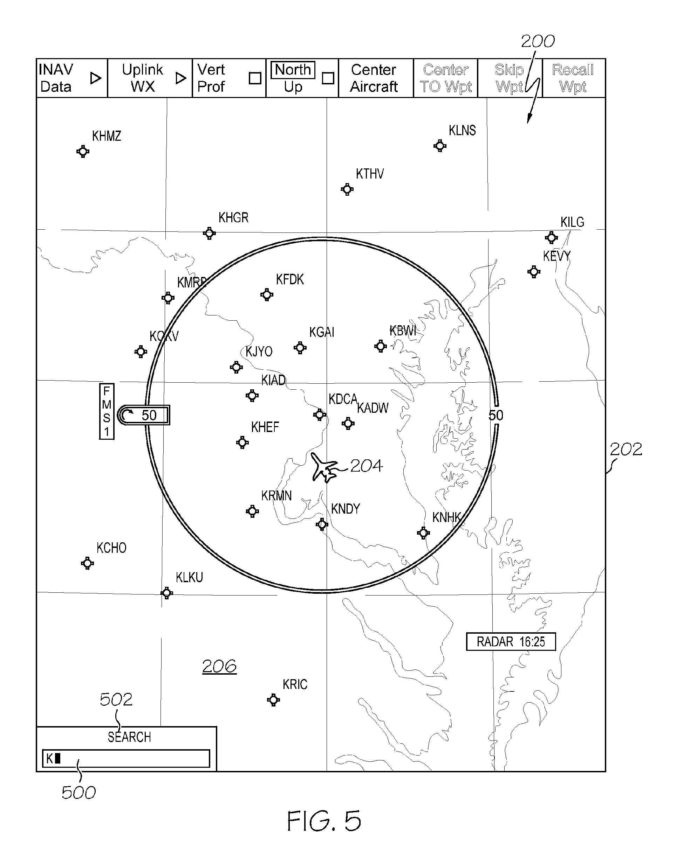

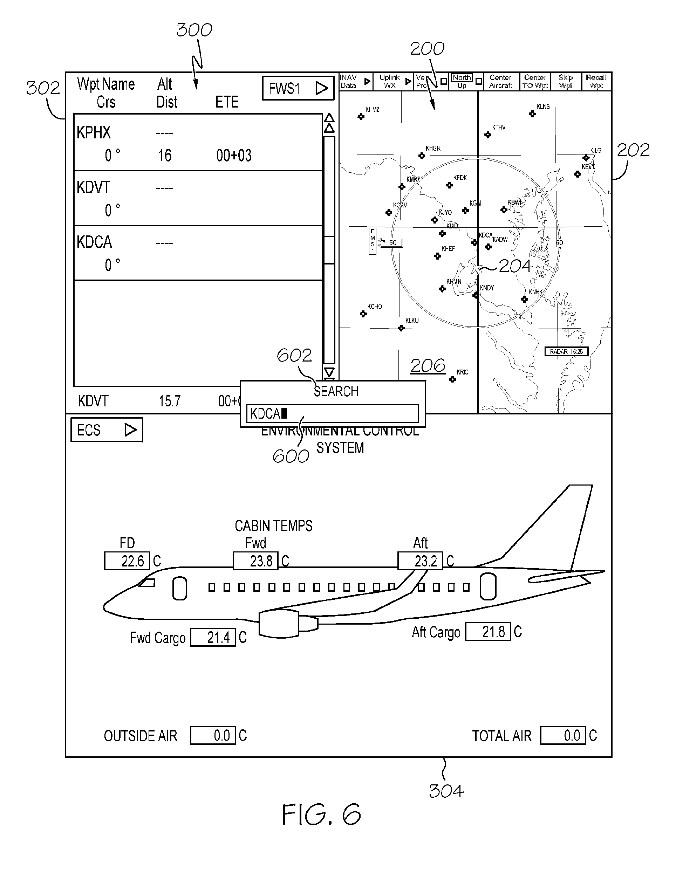

In an exemplary embodiment, the automatic search process 400 continues by graphically indicating a search mode on the display device (task 406). As used herein, a search mode should be understood as referring to the search functionality associated with one or more windows and/or processes executing within the display system. For example, a process may have a resident search function, and the window associated with the process may have a search field, menu item, or another means for a user to select and initiate the search functionality, as will be appreciated in the art. In an exemplary embodiment, the processor 106 receives an input signal from the user interface device 104 indicative of a user input, and in response graphically indicates the search mode on the display device 102. In other words, the automatic search process 400 may graphically indicate that the search functionality associated with one or more windows and/or processes is (or will be) activated based upon the received user input, even though the user has not manually selected a search mode or search function for a window and/or process. In accordance with one embodiment, the automatic search process 400 indicates the search mode in a manner that is influenced by the search context. For example, as shown in FIG. 5, if the search context designates an active window or a particular window or process, such as navigational window 202, the processor 106 may render or display a search field 500 (e.g., a text box or text entry field). In an exemplary embodiment, the automatic search process 400 replicates the user input as received within the search field in the designated window. As shown, the user input 'K' is replicated in the search field 500. That is, characters entered as a result of typing and/or keystrokes by a user are reproduced in the search field as they are entered. In this regard, the processor 106 may also render and/or display text 502 proximate the search field and/or text box that denotes the search mode (e.g., 'SEARCH'). In another embodiment, if the search context designates more than one currently displayed window or the entire system, the processor 106 may render or display a search field or text box overlying one or more windows (e.g., in the center of the display device 102). For example, as shown in FIG. 6, a search field 600 may be shown overlying the windows 202, 302, 304 along with text 602 to indicate the search mode.

In an exemplary embodiment, the automatic search process 400 continues by automatically searching a database for an element that satisfies the user input (task 408). In an exemplary embodiment, the automatic search process 400 searches automatically as the user input is received, that is, the automatic search process 400 searches without the user manually initiating the search (e.g., by hitting ENTER or graphically selecting the equivalent thereof). In this regard, the automatic search process 400 may be adapted to display a list of partial matches corresponding to elements in the database that satisfy and/or match a partial user input. Alternatively, the automatic search process 400 may briefly wait for an indication that the user input is complete (e.g., ENTER), or detecting that the user input is finished (e.g., based on a period of time with no input) before searching for an element that satisfies the user input.

In accordance with one or more embodiments, the automatic search process 400 searches the database(s) based on the designated search context. For example, if the search context designates an active window (or the underlying process) displayed on the display device 102, the automatic search process 400 automatically searches the database(s) 110 that are associated with the active window (or process) for an element that satisfies the user input. In this regard, the processor 106 may be configured to identify and search the database(s) 110 for an element that matches the user input, or alternatively, the processor 106 may provide the user input to a search function embodied within the active window or process. Similarly, if the search context designates a specific window and/or process (e.g., the most relevant or commonly used window/process), the automatic search process 400 automatically searches the database(s) 110 that are associated with the designated window and/or process. If the search context designates all currently displayed windows (or underlying processes) for searching, the automatic search process 400 may automatically search the database(s) 110 that are associated with the currently displayed windows and/or processes. In this regard, for each displayed window and/or process, the processor 106 may be configured to search the associated database(s) 110, or alternatively, the processor 106 may provide the user input to a search function embodied within the displayed window and/or process. In another embodiment, if the search context designates the entire system, the automatic search process 400 may search all databases 110 of the display system 100 for an element that satisfies the user input.

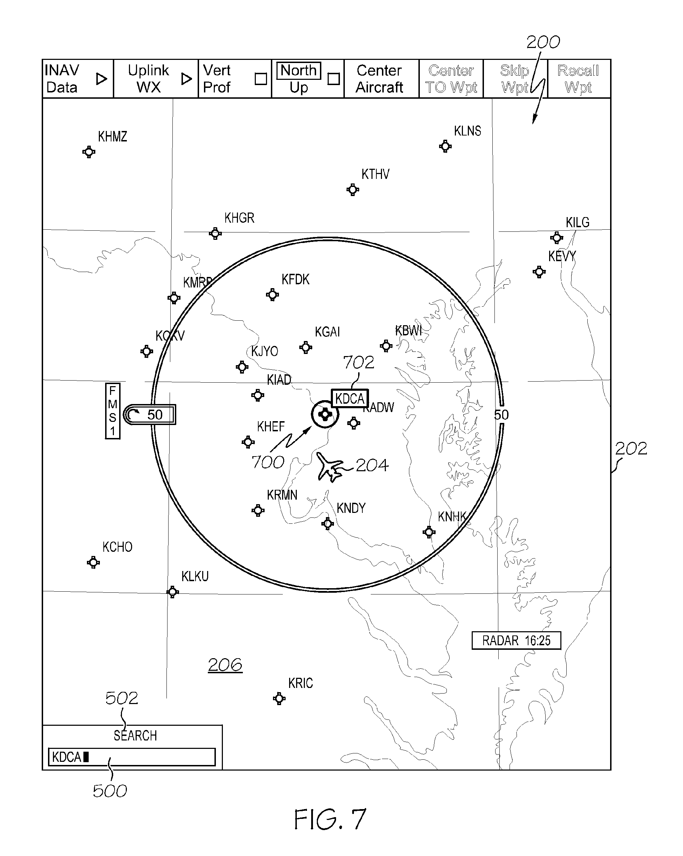

If no element in the database(s) satisfies the user input, the automatic search process 400 may graphically indicate a failure on the display device 102 or otherwise exit and terminate the process (task 410). In an exemplary embodiment, if an element in the database satisfies the user input, the automatic search process 400 continues by identifying the element on the display device to indicate a search result based on the user input (task 410, 412). For example, if a navigational window 202 is displayed on the display device 102 and the navigational window 202 is the active window and/or designated window based on the search context, the automatic search process 400 searches the database(s) 110 associated with the navigational window and/or process, as described above. In response to locating an element in the database that satisfies or matches the user input, the automatic search process 400 may graphically identify the element in the navigational window. For example, as shown in FIG. 7, if the user input (e.g., 'KDCA') matches or otherwise identifies an element in a navigational database (e.g., airport KDCA), the automatic search process 400 may graphically identify the element by displaying a graphical representation of the element 700 within the navigational window 202. As shown, the automatic search process 400 may indicate and/or identify the element 700 by highlighting the element using one or more a graphical features. For example, as shown in FIG. 7, the graphical feature is realized as a circle surrounding the element 700, although in practice, the graphical feature may be realized as another suitable geometric shape surrounding the element. In alternative embodiments, element 700 may be identified using an arrow, a pointer, or another suitable symbol displayed proximate the element 700. Alternatively, instead of or in addition to highlighting the element 700, the automatic search process 400 may highlight or identify the element 700 by rendering and/or displaying the element 700 using a visually distinguishable characteristic. That is, the automatic search process 400 may render and/or display the element 700 using a visually distinguishable characteristic, such as, for example, a visually distinguishable color, hue, tint, brightness, graphically depicted texture or pattern, contrast, shading, outlining, transparency, opacity, and/or another suitable graphical effect (e.g., blinking, pulsing, or other animation).

In a similar manner, the automatic search process 400 may also highlight a textual identifier 702 proximate the element 700 as shown. In this manner, the element is distinguished from other items displayed in the window such that the element is clearly indicated or readily identified within the window as the search result based on the user input. In another embodiment, the automatic search process 400 may identify the element 700 by shading, dimming, hiding, or masking other objects and/or elements displayed in the window proximate the element 700. For example, if the user input is an airport (or waypoint or navigational aid), the automatic search process 400 may hide all airports on the navigational map except for the airport (or waypoint or navigational aid) that satisfies the user input.

In accordance with one embodiment, if multiple items in satisfy the user input, the automatic search process 400 may render and/or display a list of the items such that a user may select the desired item from the list. In another embodiment, the automatic search process 400 may determine the item nearest the current location of the aircraft as the item that satisfies the user input. For example, if the user input is a waypoint identifier that corresponds to multiple waypoints at different locations around the world, the automatic search process 400 may determine and graphically identify the nearest waypoint to the current location of the aircraft as the element that satisfies the user input.

If the corresponding location of the element is such that the element is not within the area currently shown in the window, the automatic search process 400 may graphically identify the element by scrolling the window such that the graphical representation of the element is displayed in the window. For example, if the window is a navigational window and the location of the element corresponds to a location on the navigational map that is beyond the currently displayed region to the right, the automatic search process 400 may scroll the navigational window to the right (e.g., the navigational map shifts right to left) until the element is positioned within the window as desired. In accordance with one embodiment, the window is adjusted or scrolled such that the element is in the center of the navigational map. In this example, scrolling the navigational window and/or navigational map provides situational awareness by allowing a user (e.g., a pilot) to ascertain the location of the element relative to the current location of the aircraft 112. Alternatively, instead of scrolling the window, the automatic search process 400 may instantaneously update and/or refresh the display such that the element is centered or otherwise displayed within the window.

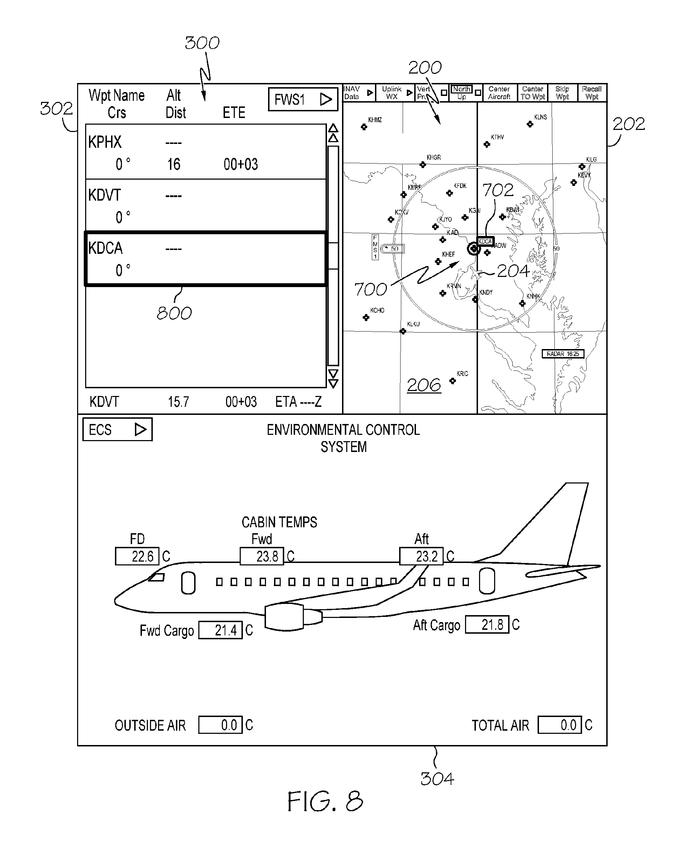

In a similar manner, if the search context designates more than one currently displayed window and/or process for searching, the automatic search process 400 may graphically identify the element in each window where an element in the associated database satisfies the user input. For example, as shown in FIG. 8, a display device 102 may simultaneously have a navigational window 202 and a flight planning window 302 displayed thereon. If the user input is an airport (e.g., 'KDCA'), the automatic search process 400 may graphically identify the airport in the navigational window 202 as described above. If the airport is also part of the flight plan 300, the automatic search process 400 may also graphically identify the airport 800 in the flight planning window 302. For example, the flight planning window 302 may be associated with a database containing navigational reference points (e.g., navigational aids, waypoints, and/or airports) that comprise a current flight plan 300 (or waypoint list). If an element in the database satisfies the user input (e.g., 'KDCA' is part of the flight plan 300), the automatic search process 400 may graphically indicate the element 800 within the current flight plan 300. For example, the flight planning window 302 may scroll such that the airport 800 is centered or otherwise displayed within the flight planning window 302. The automatic search process 400 may also be configured to highlight, graphically identify, or otherwise indicate the airport 800 in the flight planning window 302, as described above in the context of FIG. 7.

In another embodiment, if the search context designates a window and/or process that is not currently displayed on the display device, the automatic search process 400 may display and/or render the designated window on the display device in response to an element satisfying the user input. For example, if the search context designates the most commonly used process and/or window for searching, and if an element in the database associated with the most commonly used process and/or window satisfies the user input, the automatic search process 400 may display and/or render the designated window overlying any other windows that may be displayed on the display device 102. The automatic search process 400 may continue by graphically identifying the element in the designated window, as described above. Similarly, if the search context designates the entire system for searching, in response to an element in a system-level database satisfying the user input, the automatic search process 400 may graphically indicate or identify the element in the appropriate window(s), or display and/or render the appropriate windows associated with the database on the display device 102 based on the search context.

To briefly summarize, the methods and systems described above allow a user, such as a pilot or crew member, to quickly locate an item in one or more windows on a display device in a vehicle without having to manually select a search field or manually initiate a search function prior to entering a search query. The result of the search may be graphically indicated or identified in a manner that provides enhanced situational awareness and allows a user to quickly and reliably satisfy his or her information needs.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It being understood that various changes may be made in the function and arrangement of elements described in an exemplary embodiment without departing from the scope of the subject matter as set forth in the appended claims.

## Claims

1. A method for locating an item on a display device (102), the method comprising:
indicating a search mode (502) on the display device (102) in response to receiving a user input when the search mode (502) is not selected;
automatically searching a database (110) for an element (700) that satisfies the user input; and
identifying, on the display device (102), an element (700) in the database (110) that satisfies the user input.

2. The method of claim 1, the database (110) being associated with a window (202) displayed on the display device (102), wherein identifying the element (700) comprises graphically identifying the element (700) in the window (202).

3. The method of claim 2, further comprising displaying a graphical representation of the element (700) in the window (202) if an element (700) in the database (110) satisfies the user input.

4. The method of claim 3, wherein graphically identifying the element (700) in the window (202) comprises displaying the graphical representation using a visually distinguishable characteristic.

5. The method of claim 1, the display device (102) having a plurality of windows (202, 302, 304) displayed thereon, wherein identifying the element (700) comprises graphically identifying the element (700) in a first window (202) of the plurality of windows (202, 302, 304), the first window (202) being associated with the database (110).

6. The method of claim 1, further comprising determining a search context, wherein if the search context identifies an active window (202) displayed on the display device (102):
indicating the search mode (502) comprises indicating the search mode (502) in the active window (202);
automatically searching a database (110) comprises automatically searching a database (110) associated with the active window (202) for an element (700) that satisfies the user input; and
if an element (700) in the database (110) satisfies the user input, identifying the element (700) comprises identifying the element (700) in the active window (202).

7. The method of claim 1, further comprising determining a search context, wherein if the search context identifies a plurality of windows (202, 302, 304) displayed on the display device (102), for each respective window (202) of the plurality of windows (202, 302, 304):
automatically searching a database (110) comprises automatically searching a database (110) associated with the respective window (202) for an element (700) that satisfies the user input; and
if an element (700) in the database (110) satisfies the user input, identifying the element (700) comprises identifying the element (700) in the respective window (202).

8. A method for locating an item in a window (202) displayed on a display device (102), the method comprising:
receiving a user input when no item is selected within the window (202); and
in response to receiving the user input:
graphically indicating a search mode (502) on the display device (102);
searching a database (110) associated with the window (202) for an element (700) that satisfies the user input; and
if an element (700) in the database (110) satisfies the user input, graphically indicating the element (700) in the window (202).

9. The method of claim 8, further comprising displaying a graphical representation of the element (700) in the window (202) if an element (700) in the database (110) satisfies the user input, wherein graphically indicating the element (700) comprises displaying the graphical representation using a visually distinguishable characteristic.

10. The method of claim 8, wherein graphically indicating the element (700) in the window (202) comprises scrolling the window (202) such that a graphical representation of the element (700) is displayed in the window (202).
